# EUROPÄISCHE PATENTSCHRIFT

(11) **EP 3 636 397 B1**
(45) Veröffentlichungstag und Bekanntmachung des Hinweises auf die Patenterteilung: **09.03.2022**
(21) Anmeldenummer: 19195483.3
(22) Anmeldetag: 05.09.2019
(51) Int. Cl.: B25J 15/00, B25J 15/06, B25J 19/00

(54) **VERFAHREN ZUM BETRIEB EINES TRANSFERSYSTEMS UND TRANSFERSYSTEM**
METHOD FOR OPERATING A TRANSFER SYSTEM AND TRANSFER SYSTEM
PROCÉDÉ DE FONCTIONNEMENT D'UN SYSTÈME DE TRANSFERT ET SYSTÈME DE TRANSFERT

(30) Priorität: 12.10.2018 DE 102018125276; 19.11.2018 DE 102018129041
(43) Veröffentlichungstag der Anmeldung: 15.04.2020
(73) Patentinhaber: Schuler Pressen GmbH, 73033 Göppingen (DE)
(72) Erfinder: GEBHARD, Markus, 89554 Böhmenkirch (DE)
(74) Vertreter: Otten, Roth, Dobler & Partner mbB Patentanwälte

(56) Entgegenhaltungen:
- EP-A1- 3 694 692
- EP-A2- 2 960 024
- WO-A1-2017/044627
- DE-A1-102007 058 114
- DE-A1-102011 006 826
- DE-A1-102016 011 618
- DE-U1-202016 102 137

## Beschreibung

Die Erfindung betrifft ein Verfahren zum Betrieb eines Transfersystems nach Anspruch 1 sowie ein Transfersystem zur Durchführung dieses Verfahrens nach Anspruch 4.

Aus der DE 20 2016 102 137 U1 ist eine pneumatische Handhabungsvorrichtung bekannt, welche einen Manipulator mit einer Quertraverse umfasst, welche wenigstens einen an der Quertraverse montierten Adapter umfasst und welche mindestens eine Druckluftversorgung umfasst, wobei jeder Adapter ein Grundgestell und wenigstens ein Tooling mit einem Toolingrohr umfasst, wobei jedes Grundgestell mindestens eine Energiekupplung für das mindestens eine Toolingrohr umfasst und wobei jede Energiekupplung zum Anschluss des wenigstens einen Toolings mindestens zwei Ausgänge für Druckluft und/oder Vakuum umfasst.

Aus der EP 2 960 024 A2 1 ist ein Anlage zur Handhabung von Werkstücken, mit einer Handhabungsvorrichtung, welche wenigstens einen Unterdruckgreifer zum Ansaugen eines Werkstückes umfasst, mit wenigstens einen mittels Druckluftzufuhr betreibbaren Unterdruckerzeuger zur Versorgung des Unterdruckgreifers mit Unterdruck und mit wenigstens einem ansteuerbaren Steuerventil, mittels welchem die Druckluftzufuhr zu dem Unterdruckerzeuger steuerbar ist, wobei dem Steuerventil eine Steuereinrichtung zur bedarfsgerechten Ansteuerung des Steuerventils zugeordnet ist, wobei die Handhabungsvorrichtung eine Auswerteeinheit zur Auswertung von Betriebsdaten des Unterdruckerzeugers und/oder von Betriebsdaten der Handhabungsvorrichtung sowie zur Erzeugung von Steuersignalen in Abhängigkeit der ausgewerteten Betriebsdaten aufweist, wobei die Auswerteeinheit an der Handhabungsvorrichtung angeordnet ist und wobei die Steuereinrichtung das Steuerventil in Abhängigkeit der von der Auswerteeinheit übermittelten Steuersignale ansteuert.

Aus der nachveröffentlichten EP 3 694 692 A1 ist eine Roboterarmkupplung zum Verbinden eines Werkzeugs mit einem Roboterarm bekannt, wobei die Roboterarmkupplung eine Montageschnittstelle zum Montieren der Roboterarmkupplung an einem Roboterarm, eine Kopplerschnittstelle, an der unterschiedlich betätigte Werkzeuge lösbar und austauschbar gekoppelt werden können, eine Flüssigkeitseinlassöffnung, eine Vielzahl von Grenzflächenfluidanschlüssen, mindestens ein Ventil in Fluidverbindung mit der Fluideinlassöffnung und einstellbar auf mindestens einen ersten und einen zweiten Betriebszustand; eine Saugvorrichtung, die einen Fluidsaugdruck auf einen Grenzflächenfluidanschluss ausübt, umfasst, wobei wenn ein erstes oder ein zweites oder ein drittes Werkzeug an der Kupplungsschnittstelle montiert ist, eines von beiden durch dasselbe mindestens eine Ventil gesteuert werden kann.

Es ist Aufgabe der Erfindung ein Verfahren zum Betrieb einer Transfereinrichtung sowie eine Transfereinrichtung vorzuschlagen, bei welchem bzw. bei welcher bei einer gleichbleibenden Schnittstelle zwischen Toolingrohr und Grundgestell zwischen verschiedenen Betriebsarten der Vakuumerzeugung frei gewählt werden kann.

Diese Aufgabe wird durch den Anspruch 1 bzw. 4 gelöst. In den jeweiligen Unteransprüchen sind vorteilhafte und zweckmäßige Weiterbildungen angegeben.

Das erfindungsgemäße Verfahren zum Betrieb eines Transfersystems sieht vor, dass das Transfersystem entweder nach einer ersten Betriebsart, welche auch als zentrale Vakuumerzeugung bezeichnet wird, betrieben wird oder nach einer zweiten Betriebsart, welche auch als dezentrales Vakuumerzeugung bezeichnet wird, betrieben wird, wobei in der ersten Betriebsart (zentrales Vakuum) ein Steuermittel in eine erste Schaltstellung geschaltet wird, so dass zur Versorgung einer Zahl von Toolingrohren ein erstes Versorgungsmittel aktiviert wird, so dass den Toolingrohren von dem ersten Versorgungsmittel über jeweils eine Versorgungsleitung an jeweils einer Energiekupplung pro Toolingrohr wahlweise Druckluft oder Vakuum zur Verfügung gestellt wird, wobei in der zweiten Betriebsart (dezentrales Vakuum) das Steuermittel in eine zweite Schaltstellung geschaltet wird, so dass zur Versorgung der Zahl von Toolingrohren ein zweites Versorgungsmittel aktiviert wird, so dass den Toolingrohren von dem zweiten Versorgungsmittel über die jeweilige Energiekupplung jeweils über eine erste Versorgungsleitung Druckluft zum Abblasen und jeweils über eine zweite Versorgungsleitung Druckluft zur Vakuumerzeugung zur Verfügung gestellt wird. Hierdurch können die an der Transfereinrichtung verbauten Toolingrohre abhängig von den Erfordernissen zentral oder dezentral mit Druckluft bzw. Vakuum versorgt werden, ohne dass ein weiterer Austausch oder Umbau von Komponenten erforderlich ist.

Die Erfindung sieht weiterhin vor, dass für einen Betrieb des Transfersystems entsprechend der ersten Betriebsart eine Versorgung der Toolingrohre durch das zweite Versorgungsmittel (dezentral) und dass für einen Betrieb des Transfersystems entsprechend der zweiten Betriebsart eine Versorgung der Toolingrohre durch das erste Versorgungsmittel durch Sperrventile, welche zwischen dem ersten, zentralen Versorgungsmittel und dem zweiten, dezentralen Versorgungsmittel angeordnet sind, abgesperrt wird. Hierdurch wird eine ungewünschte, gegenseitige Beeinflussung der in den jeweiligen Betriebsarten aktiven bzw. passiven Versorgungseinrichtungen unterbunden, so dass Funktionssicherheit und ein sparsamer Umgang mit Druckluft sichergestellt ist.

Schließlich sieht das Verfahren vor, dass für einen Betrieb des Transfersystems nach der ersten Betriebsart (zentral) je Toolingrohr nur ein erster Ausgang der jeweiligen Energiekupplung für eine wechselweise Zuleitung von Druckluft oder von Vakuum genutzt wird und ein jeweils vorhandener zweiter Ausgang durch einen Verschluss, insbesondere ein Ventil oder einen Stopfen, verschlossen wird und dass für einen Betrieb des Transfersystems nach der zweiten Betriebsart (dezentral) je Toolingrohr der erste Ausgang der jeweiligen Energiekupplung für eine Zuleitung von Druckluft zum Abblasen genutzt wird und der zweite Ausgang der jeweiligen Energiekupplung für eine Zuleitung von Druckluft zur Vakuumerzeugung genutzt wird. Hierdurch ist es möglich, Toolingrohre über nur zwei Ausgänge der Energiekupplung sowohl in der zentralen Betriebsart als auch in der dezentralen Betriebsart pneumatisch zu versorgen.

Ein Transfersystem zur Durchführung eines Verfahrens nach einem der Ansprüche 1 bis 3 ist derart ausgebildet, dass das Transfersystem ein erstes an die Druckluftversorgung angeschlossenes Versorgungsmittel zur Bereitstellung von Druckluft und Vakuum umfasst, dass das Transfersystem ein zweites an die Druckluftversorgung angeschlossenes Versorgungsmittel zur Bereitstellung von Druckluft umfasst und dass das Transfersystem ein Steuermittel umfasst, wobei in einer ersten Schaltstellung des Steuermittels das wenigstens eine Toolingrohr über das erste Versorgungsmittel mit Druckluft und Vakuum versorgt ist und wobei in einer zweiten Schaltstellung des Steuermittels das wenigstens eine Toolingrohr über das zweite Versorgungsmittel mit Druckluft versorgt ist. Hierdurch können die an der Transfereinrichtung verbauten Toolingrohre abhängig von den Erfordernissen zentral oder dezentral mit Druckluft bzw. Vakuum versorgt werden, ohne dass ein weiterer Austausch oder Umbau von Komponenten erforderlich ist.

Erfindungsgemäß ist es bei diesem Transfersystem vorgesehen, dass das erste Versorgungsmittel (zentral) wenigstens eine mit Druckluft betriebene Vakuumerzeugungseinrichtung umfasst und dass das zweite Versorgungsmittel (dezentral) ein erstes Ventil und ein zweites Ventil umfasst, wobei das erste Versorgungsmittel an einen ersten Eingang der Energiekupplung des Grundgestells angeschlossen ist und diesen wahlweise mit Druckluft oder Vakuum speist und wobei das zweite Versorgungsmittel an den ersten Eingang und einen zweiten Eingang der Energiekupplung des Grundgestells angeschlossen ist und einen der Eingänge mit Druckluft speist und den anderen der Eingänge ebenfalls mit Druckluft speist. Durch einen derartigen Anschluss der beiden Versorgungsmittel muss die Energiekupplung für beide Versorgungsvarianten nur zwei Eingänge bereitstellen.

Es ist auch vorgesehen, dass das Steuermittel und das zweite Versorgungsmittel (dezentral) an dem Manipulator oder an der Quertraverse oder an dem Grundgestell angeordnet sind und dass das erste Versorgungsmittel (zentral) an dem Grundgestell oder der Quertraverse angeordnet ist. Hierdurch wird das Gewicht des Grundgestells niedrig gehalten.

Weiterhin ist es vorgesehen, dass das Steuermittel ein Umschaltventil und mehrere Sperrventile umfasst, wobei die Sperrventile zwischen dem ersten Versorgungsmittel und zwischen dem zweiten Versorgungsmittel und der wenigstens einen Energiekupplung derart angeordnet sind, dass in der ersten Schaltstellung des Steuermittels Versorgungsleitungen zwischen dem zweiten Versorgungsmittel und den Eingängen der Energiekupplung gesperrt sind und die Versorgungsleitung bzw. die Versorgungsleitungen zwischen dem ersten Versorgungsmittel und dem Eingang bzw. den Eingängen der Energiekupplung geöffnet ist bzw. sind und dass in der zweiten Schaltstellung des Steuermittels die Versorgungsleitung bzw. die Versorgungsleitungen zwischen dem ersten Versorgungsmittel und dem Eingang bzw. den Eingängen der Energiekupplung gesperrt ist bzw. sind und die Versorgungsleitungen zwischen dem zweiten Versorgungsmittel und den Eingängen der Energiekupplung geöffnet sind. Hierdurch ist Druckverlusten wirksam vorgebeugt, so dass die Transfereinrichtung keinen unnötigen Energieverbrauch aufweist.

Es ist auch vorgesehen, dass eines der Toolingrohre derart an eine der Energiekupplungen angeschlossen ist, dass das Toolingrohr und die an diesem angeordneten Sauggreifer in der ersten Schaltstellung des Steuermittels mit einem der Ausgänge der Energiekupplung verbunden sind, welcher mit demjenigen Eingang der Energiekupplung in Verbindung steht, welcher an das erste Versorgungsmittel angeschlossen ist, wobei der jeweils andere Ausgang der Energiekupplung insbesondere durch das Toolingrohr verschlossen ist oder dass eines der Toolingrohre derart an eine der Energiekupplungen angeschlossen ist, dass das Toolingrohr und die an diesem angeordneten Sauggreifer in der zweiten Schaltstellung des Steuermittels mit den Ausgängen der Energiekupplung verbunden sind, welche mit den Eingängen der Energiekupplung in Verbindung stehen, welche an das zweite Versorgungsmittel angeschlossen sind. Hierdurch kann das jeweilige Toolingrohr auf einfachste Weise für eine zentrale oder dezentrale Versorgung vorbereitet werden.

Weiterhin ist es vorgesehen, dass das Transfersystem zwei mit der Quertraverse verbundene Grundgestelle mit je zwei Energiekupplungen umfasst, und dass das Transfersystem vier Toolingrohre umfasst, wobei diese an die vier Energiekupplungen angeschlossen sind. Ein derartiges Transfersystem ist insbesondere zur Handhabung von zwei flächigen Werkstücken geeignet.

Es ist auch vorgesehen, dass die wenigstens eine Vakuumerzeugungseinrichtung des ersten Versorgungsmittels als pneumatisch gesteuerte Vakuumerzeugungseinrichtung mit einem Kompaktejektor ausgebildet ist oder dass die wenigstens eine Vakuumerzeugungseinrichtung des ersten Versorgungsmittels als elektrisch gesteuerte Vakuumerzeugungseinrichtung mit einem Kompaktejektor ausgebildet ist. Hierdurch kann das erste Versorgungsmittel optimal auf die an der Transfereinrichtung bevorzugte Steuerungstechnik ausgelegt werden.

Schließlich ist es vorgesehen, dass jedes Tooling, welches in der zweiten Schaltstellung des Steuermittels betrieben wird, an jedem seiner Sauggreifer einen Einzelejektor zur Vakuumerzeugung umfasst. Hierdurch kann das Tooling an seinen einzelnen Sauggreifern durch die Verwendung unterschiedlicher Einzelejektoren unterschiedliche, auf die Funktion des einzelnen Sauggreifers angepasste Saugkräfte erzeugen.

Im Sinne der Erfindung wird unter einer zentralen Vakuumerzeugung eine Vakuumerzeugung verstanden, welche nahe an einem Tooling und insbesondere an einer Quertraverse und/oder an einem Grundgestell erfolgt.

Im Sinne der Erfindung wird unter einer dezentralen Vakuumerzeugung eine Vakuumerzeugung verstanden, welche direkt an jedem Sauggreifer des Toolings erfolgt.

Weitere Einzelheiten der Erfindung werden in der Zeichnung anhand von schematisch dargestellten Ausführungsbeispielen beschrieben.

Hierbei zeigt:
- Figur 1:: einen Manipulator mit einer Quertraverse in perspektivischer Ansicht;
- Figur 2:: ein Grundgestell mit zwei Toolings;
- Figur 3:: das in der Figur 2 gezeigte Grundgestell in Einzeldarstellung;
- Figur 4:: die in der Figur 2 gezeigten Toolings in Einzeldarstellung;
- Figur 5:: einen schematischen Pneumatikplan zu einer ersten Schaltstellung, wobei pneumatisch gesteuert wird;
- Figur 6:: den Pneumatikplan der Figur 5 in einer zweiten Schaltstellung;
- Figur 7:: einen schematischen Pneumatikplan zu einer ersten Schaltstellung, wobei elektrisch gesteuert wird;
- Figur 8:: den Pneumatikplan der Figur 7 in einer zweiten Schaltstellung und
- Figur 9:: eine schematische Darstellung eines Transfersystems.

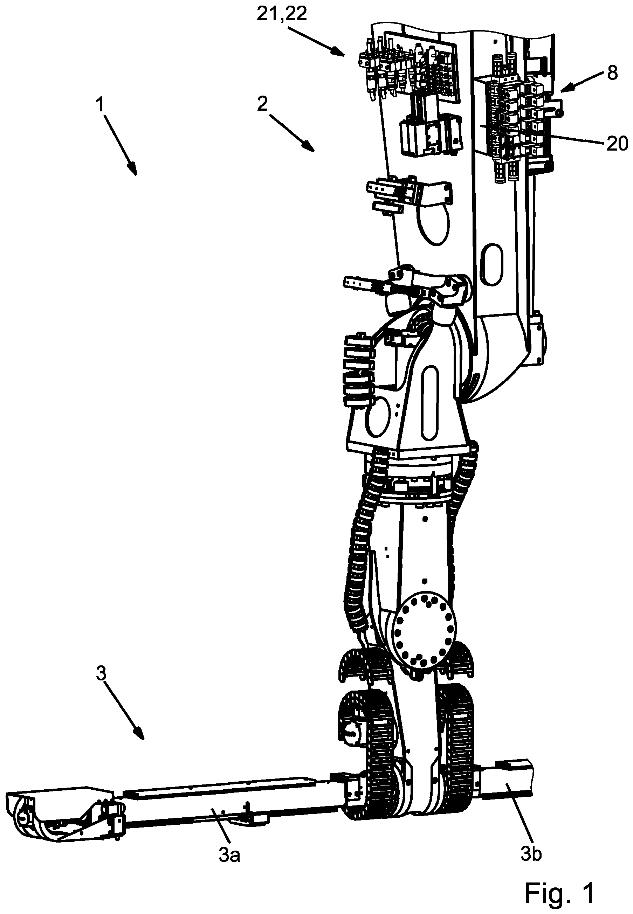

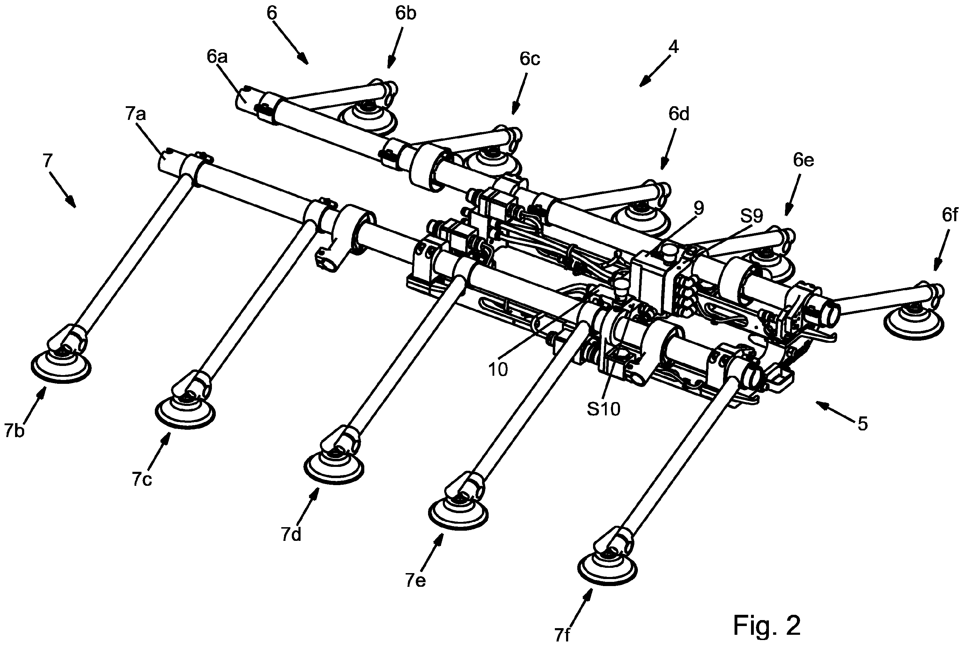

In den Figuren 1 und 2 sind die wesentlichen Komponenten eines erfindungsgemäßen Transfersystems 1 gezeigt. Hierbei zeigt die Figur 1 in perspektivischer Ansicht einen Manipulator 2 mit einer an dem Manipulator 2 fixierten Quertraverse 3, welche auch als Crossbar bezeichnet wird. Die Figur 2 zeigt in perspektivischer Ansicht einen Adapter 4, welcher ein Grundgestell 5 und zwei mit dem Grundgestell 5 über Aufnahmen verbundene Toolings 6, 7 umfasst. Die Toolings 6, 7 umfassen Toolingrohre 6a, 7a und an die Toolingrohre 6a, 7a angeschlossene Sauggreifer 6b bis 6f und 7b bis 7f. Das Grundgestell 5 wird auch als Tragrahmen bezeichnet. Das Transfersystem 1 umfasst die in den Figuren 1 und 2 gezeigten Komponenten, wobei der Adapter 4 im montierten Zustand mit einem linken Ausleger 3a der Quertraverse 3 verbunden ist und wobei es vorgesehen ist einen weiteren, nicht dargestellten Adapter mit einem nur teilweise dargestellten, rechten Ausleger 3b der Quertraverse 3 zu verbinden.

Entsprechend umfasst das Transfersystem 1 den Manipulator 2 mit seiner Quertraverse 3, den an der Quertraverse 3 montierten Adapter 4 und eine Druckluftversorgung 8. Das Grundgestell 5 umfasst eine erste Energiekupplung 9 zum Anschluss des ersten Toolings 6 und eine zweite Energiekupplung 10 zum Anschluss des zweiten Toolings 7 (siehe Figur 2).

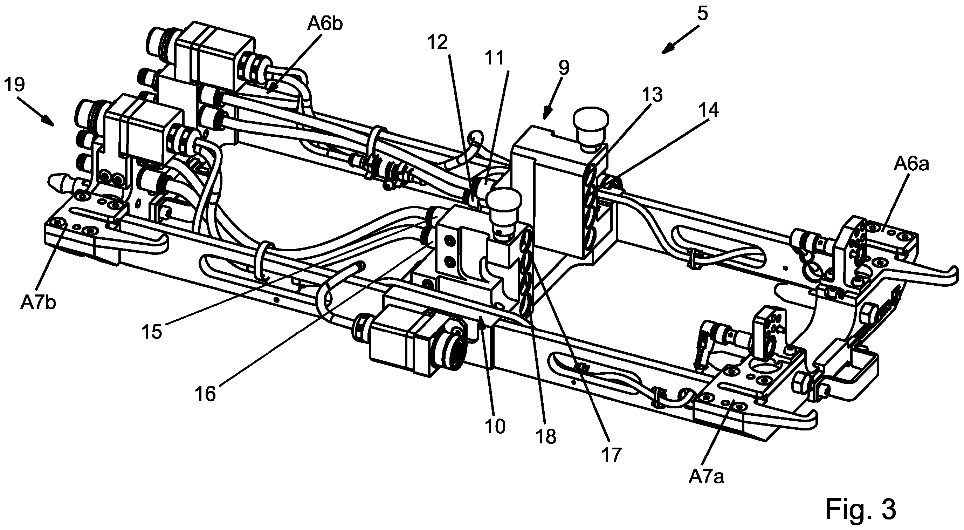

In der Figur 3 ist das aus der Figur 2 bekannte Grundgestell 5 leicht vergrößert ohne die Toolings dargestellt. Die erste und die zweite Energiekupplung 9, 10 umfassen jeweils zwei Eingänge 11, 12 bzw. 15, 16 und jeweils zwei Ausgänge 13, 14 bzw. 17, 18 für Druckluft und/oder Vakuum. Das Transfersystem 1 umfasst ein erstes an die Druckluftversorgung 8 angeschlossenes Versorgungsmittel 19 zur Bereitstellung von Druckluft und Vakuum. Das erste Versorgungsmittel 19 ist auf dem Grundgestell 5 oder gemäß nicht dargestellter Ausführungsvarianten an der Quertraverse 3 oder an dem Manipulator 2 angeordnet. Das Transfersystem 1 umfasst ein zweites an die Druckluftversorgung 8 angeschlossenes Versorgungsmittel 20 zur Bereitstellung von Druckluft und Vakuum. Das Versorgungsmittel 20 ist an dem Manipulator 2 angeordnet (siehe Figur 1). Weiterhin umfasst das Transfersystem 1 ein Steuermittel 21, welches als Umschaltventil 22 ausgebildet ist (siehe Figur 1).

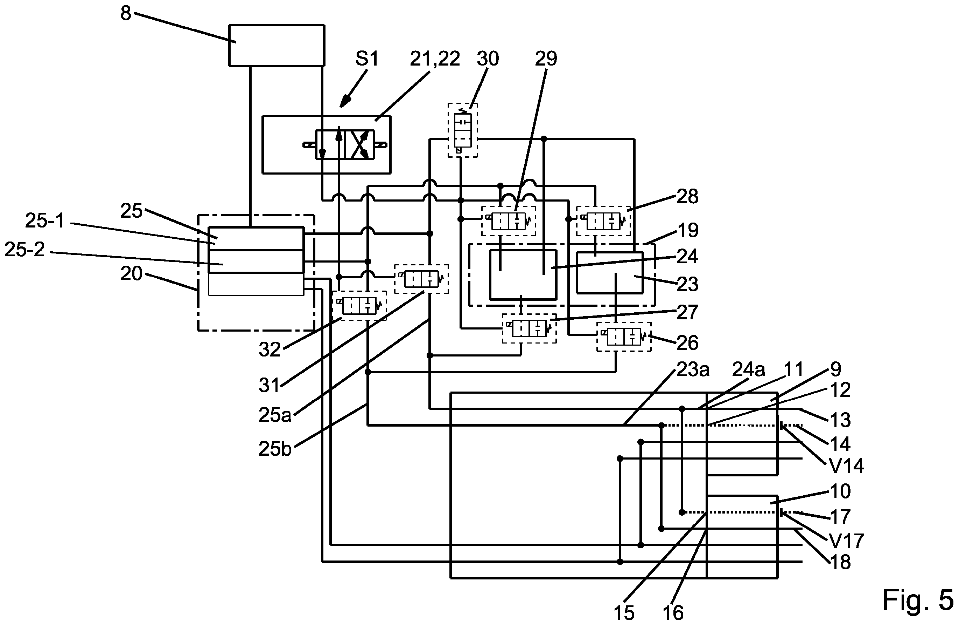

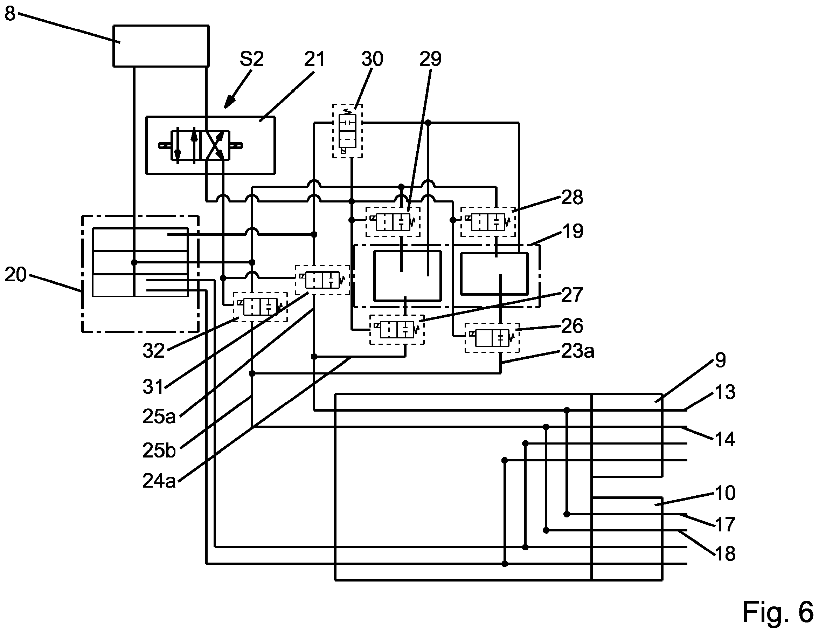

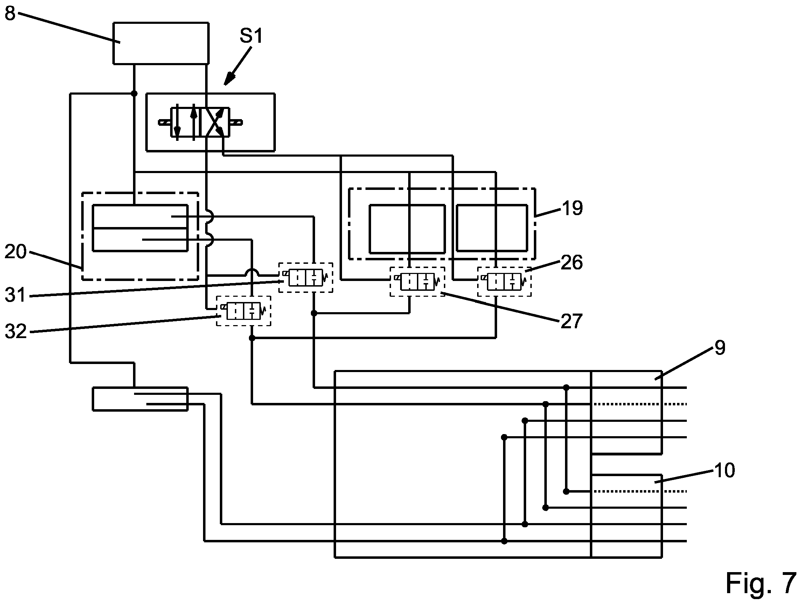

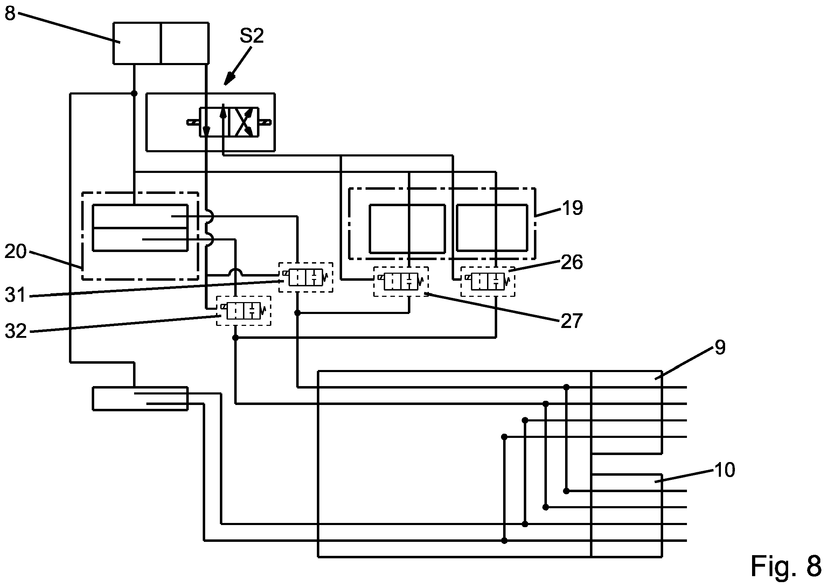

In einer ersten Schaltstellung S1 (siehe Figur 5 bzw. 7) des Steuermittels 21 sind die beiden Toolingrohre 6a, 7a über das erste Versorgungsmittel 19 mit Druckluft und Vakuum versorgt. In einer zweiten Schaltstellung S2 (siehe Figur 6 bzw. 8) des Steuermittels 21 sind die beiden Toolingrohre 6a, 7a über das zweite Versorgungsmittel 20 mit Druckluft und Vakuum versorgt.

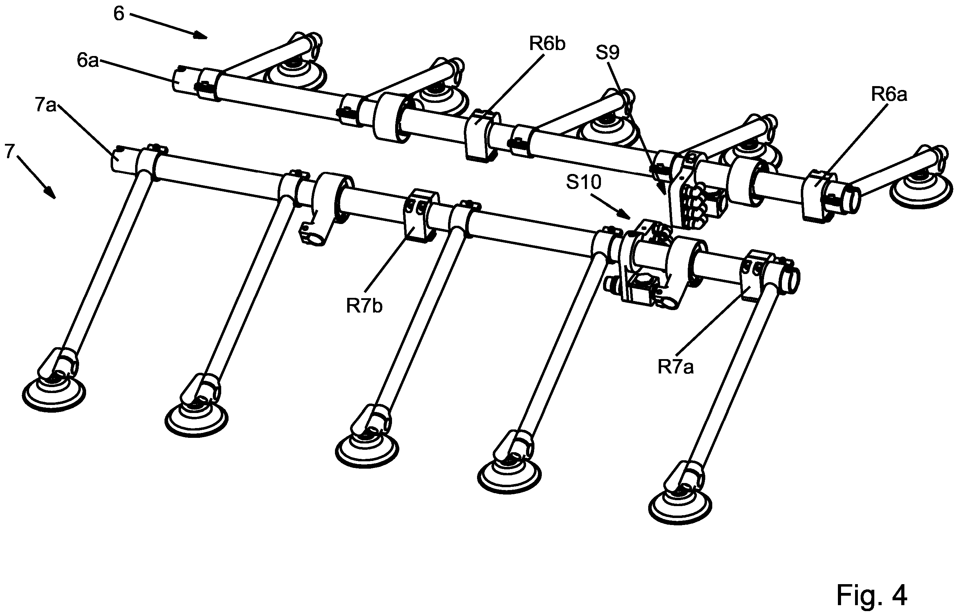

In der Figur 4 sind die beiden Toolings 6, 7 in Alleinstellung gezeigt. Das Tooling 6 umfasst einen Stecker S9, mit welchem dieses an die erste Energiekupplung 9 des Grundgestells 5 angeschlossen ist (siehe auch Figur 2). Ebenso umfasst das Tooling 7 einen Stecker S10, mit welchen dieses an die zweite Energiekupplung 10 des Grundgestells 5 angeschlossen ist (siehe auch Figur 2). Sofern ein Betrieb in der zweiten Schaltstellung S2 erfolgt sind Toolings verbaut, welche Einzelejektoren zur Vakuumerzeugung umfassen, wobei jedem Sauggreifer ein Einzelejektor zugeordnet ist.

Weiterhin umfasst jedes Tooling 6, 7 zwei Reiter R6a, R6b bzw. R7a, R7b, welche zur Verbindung des Toolings 6, 7 mit dem Grundgestell 5 in zugehörige Aufnahmen A6a, A6b bzw. A7a, A7b des Grundgestells 5 eingeschoben werden (vergleiche Figuren 3 und 4).

Anhand eines in der Figur 5 gezeigten schematischen Pneumatikplans wird nachfolgend die bereits erwähnte erste Schaltstellung S1 des Steuermittels 21 erläutert. Aus dem Pneumatikplan der Figur 5 geht hervor, dass das erste Versorgungsmittel 19 zwei Vakuumerzeugungseinrichtungen 23, 24 umfasst. Hierbei ist die Vakuumerzeugungseinrichtung 23 über eine Versorgungsleitung 23a mit dem zweiten Eingang 16 der zweiten Energiekupplung 10 verbunden und hierbei ist die Vakuumerzeugungseinrichtung 24 über eine Versorgungsleitung 24a mit dem ersten Eingang 11 der ersten Energiekupplung 9 verbunden. Entsprechend steht an den Ausgängen 13 und 18 jeweils Druckluft oder Vakuum zu Verfügung. Die Vakuumerzeugungseinrichtungen 23, 24 sind als pneumatisch gesteuerte Kompaktejektoren ausgebildet, welche z.B. von der J. Schmalz GmbH unter der Produktbezeichnung SCPi vertrieben werden.

Aus dem Pneumatikplan geht weiterhin hervor, dass das zweite Versorgungsmittel 20 eine erstes Ventil 25-1 umfasst. Das erste Ventil 25-1 ist über eine Versorgungsleitung 25a mit dem ersten Eingang 11 der ersten Energiekupplung 9 und mit dem ersten Eingang 15 der zweiten Energiekupplung 10 verbunden und kann über diese Versorgungsleitung 25a Druckluft zur Verfügung stellen. Das zweite Versorgungsmittel 20 umfasst ein zweites Ventil 25-2. Dieses ist über eine weitere Versorgungsleitung 25b mit dem zweiten Eingang 12 der ersten Energiekupplung 9 und mit dem zweiten Eingang 16 der zweiten Energiekupplung 10 verbunden und kann über diese Versorgungsleitung 25b Druckluft zur Verfügung stellen. Aus dem Pneumatikplan geht auch hervor, dass ein Umschalten zwischen der in der Figur 5 gezeigten ersten Schaltstellung S1 und der in der Figur 6 gezeigten zweiten Schaltstellung S2 mittels sieben Sperrventilen 26 bis 32 erfolgt. Hierbei sind die fünf Sperrventile 26 bis 30 dem ersten Versorgungsmittel 19 zugeordnet und hierbei sind die zwei Sperrventile 31, 32 dem zweiten Versorgungsmittel 20 zugeordnet.

Über das in der Schaltstellung S1 befindliche Umschaltventil 22 werden die fünf Sperrventile 26 bis 30 mit Druckluft beaufschlagt und werden hierdurch geöffnet. Somit sind in der Schaltstellung S1 die Versorgungsleitungen 23a und 24a, welche von dem ersten Versorgungsmittel 19 zu den Energiekupplungen 9 bzw. 10 führen, geöffnet, so dass die Energiekupplungen 9, 10 über diese wahlweise mit Vakuum oder Druckluft versorgt werden können. Auch die Sperrventile 28, 29 sind geöffnet, so dass das erste Versorgungsmittel 19 von der Druckluftversorgung 8 mit Druckluft versorgt werden kann. Das Sperrventil 30 ist ebenfalls geöffnet, so dass das erste Versorgungsmittel 19 zu Steuerungszwecken mit Druckluft versorgbar ist. Die Sperrventile 31, 32, welche dem zweiten Versorgungsmittel 20 zugeordnet sind, sind in der Schaltstellung S1 nicht mit Druckluft beaufschlagt und somit gesperrt, so dass keine Verbindung des zweiten Versorgungsmittels 20 mit den Energiekupplungen 9, 10 besteht. Das erste Versorgungsmittel 19 ist, wie bereits erwähnt, auf dem Grundgestell 5 angeordnet. Gemäß einer nicht dargestellten Ausführungsvariante ist es auch vorgesehen, dieses an der Quertraverse oder an dem Manipulator anzuordnen. Somit erfolgt eine Versorgung der Toolings 6, 7 zentral. Der Ausgang 14 der Energiekupplung 9 und der Ausgang 17 der Energiekupplung 10 ist bei einem zentralen Betrieb der Toolings 6, 7 jeweils durch einen schematisch dargestellten Verschluss V14 bzw. V17 verschlossen. Die Verschlüsse V14, V17 können hierbei jeweils durch einen Stopfen ausgebildet sein.

Aus den Figuren 5 bis 8 sowie der Figur 3 ist ersichtlich, dass jede Energiekupplung 9, 10 zwei weitere Eingänge umfasst, an welche Vorluft und Rückluft angeschlossen ist. Eine derartige zusätzliche Versorgung ist optional vorgesehen.

In der Figur 6 ist nun der aus der Figur 5 bekannte Pneumatikplan so dargestellt, dass das Umschaltventil 21 in seiner zweiten Schaltstellung S2 steht und in dieser die Sperrventile 31, 32 mit Druckluft beaufschlagt, so dass die Versorgungleistungen 25a, 25b freigegeben sind, welche das zweite Versorgungsmittel 20 mit den beiden Energiekupplungen 9, 10 verbinden. In der zweiten Schaltstellung S2 werden die dem ersten Versorgungsmittel 19 zugeordneten Sperrventile 26 bis 30 nicht mit Druckluft beaufschlagt, so dass eine Versorgung des ersten Versorgungsmittels 19 mit Druckluft unterbunden ist und so dass die Versorgungsleitungen 23a, 24a unterbrochen sind, welche das erste Versorgungsmittel 19 mit den beiden Energiekupplungen 9, 10 verbinden. Somit ist auch ein Rückstrom von Druckluft aus den Energiekupplungen 9, 10 verhindert. In der zweiten Schaltstellung S2 steht an den ersten Ausgängen 13, 17 der Energiekupplungen 9, 10 Druckluft zur Verfügung und in der zweiten Schaltstellung S2 steht an den zweiten Ausgängen 14, 18 der Energiekupplungen 9, 10 ebenfalls Druckluft zur Verfügung.

Die in den Figuren 7 und 8 gezeigten Pneumatikpläne sind analog zu den in den Figuren 5 und 6 gezeigten Pneumatikplänen ausgeführt. Im Unterschied ist das erste Versorgungsmittel 19 nicht mit Vakuumerzeugungseinrichtungen ausgestattet, die als pneumatisch gesteuerte Kompaktejektoren ausgebildet sind, sondern mit Vakuumerzeugungseinrichtungen ausgestattet, die als elektrisch gesteuerte Kompaktejektoren ausgebildet sind. Elektrisch gesteuerte Kompaktejektoren werden z.B. von der J. Schmalz GmbH unter der Produktbezeichnung SXMP vertrieben. Durch die Verwendung elektrisch gesteuerter Kompaktejektoren vereinfacht sich der Pneumatikplan dahingehend, dass dem ersten Versorgungsmittel 19 nur zwei Sperrventile 26, 27 zugeordnet werden müssen. Entsprechend werden in der Schaltstellung S1 (siehe Figur 7) die Sperrventile 26, 27 geöffnet und die Sperrventile 31, 32, welche dem zweiten Versorgungsmittel 20 zugeordnet sind, geschlossen. Entsprechend werden in der Schaltstellung S2 (siehe Figur 8) die Sperrventile 26, 27 geschlossen und die Sperrventile 31, 32 geöffnet. Somit erfolgt eine Versorgung der Toolings über die Energiekupplungen 9, 10 mit Vakuum und Druckluft in der ersten Schaltstellung S1 zentral und mit Druckluft in der zweiten Schaltstellung S2 dezentral.

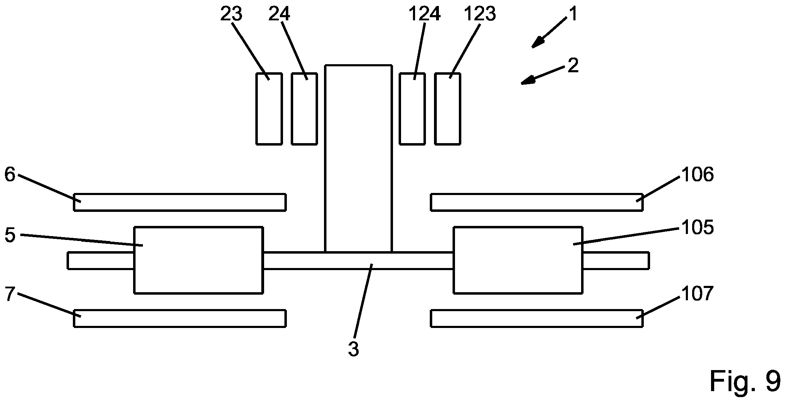

In der Figur 9 ist das Transfersystem 1 schematisch gezeigt. Die Quertraverse 3 des Manipulators 2 trägt das Grundgestell 5 sowie ein weiteres Grundgestell 105. An dem Grundgestell 5 sind die beiden Toolings 6, 7 angeordnet und an dem zweiten Grundgestell 105 sind zwei weitere Toolings 106, 107 angeordnet. Entsprechend umfasst die Transfereinrichtung 1 für die Toolings 6, 7 die beiden Vakuumerzeugungseinrichtungen 23, 24 und für die Toolings 106, 107 zwei weitere Vakuumerzeugungseinrichtungen 123, 124.

### Bezugszeichenliste:

- 1: Transfersystem
- 2: Manipulator
- 3: Quertraverse = Crossbar
- 3a: linker Ausleger von 3
- 3b: rechter Ausleger von 3
- 4: Adapter
- 5: Grundgestell von 4 = Tragrahmen
- 6: erstes Tooling von 4
- 6a: Toolingrohr von 6
- 6b-6f: Sauggreifer von 6
- 7: zweites Tooling
- 7a: Toolingrohr von 7
- 7b-7f: Sauggreifer von 7
- 8: Druckluftversorgung
- 9: Energiekupplung
- 10: Energiekupplung
- 11, 12: Eingang von 9
- 13,14: Ausgang von 9
- 15, 16: Eingang von 10
- 17, 18: Ausgang von 10
- 19: erstes Versorgungsmittel
- 20: zweites Versorgungsmittel
- 21: Steuermittel
- 22: Umschaltventil als 21
- 23, 24: Vakuumerzeugungseinrichtung von 19
- 23a: Versorgungsleitung zwischen 23 und 9
- 24a: Versorgungsleitung zwischen 24 und 10
- 25-1: erstes Ventil von 20
- 25-2: zweites Ventil von 20
- 25a: Versorgungsleitung zwischen 25-1 und 9/10
- 25b: Versorgungsleitung zwischen 25-2 und 9/10
- 26-30: Sperrventil von 19
- 31, 32: Sperrventil von 20

- 105: zweites Grundgestell
- 106, 107: drittes, viertes Tooling
- 123 ,124: Vakuumerzeugungseinrichtung

- A6a, A6b: Aufnahme von 5 für R6a, R6b
- A7a, A7b: Aufnahme von 5 für R7a, R7b

- R6a, R6b: Reiter an 6
- R7a, R7b: Reiter an 7

- S1: erste Schaltstellung von 21
- S2: zweite Schaltstellung von 22
- S9: Stecker von 6 für 9
- S10: Stecker von 7 für 10

- V14, V17: Verschluss von 14 bzw. 17

## Patentansprüche

1. Verfahren zum Betrieb eines Transfersystems (1), **dadurch gekennzeichnet, dass** das Transfersystem (1) entweder nach einer ersten Betriebsart oder nach einer zweiten Betriebsart betrieben wird,
- wobei in der ersten Betriebsart ein Steuermittel (21) in eine erste Schaltstellung (S1) geschaltet wird, so dass zur Versorgung einer Zahl von Toolingrohren (6a; 7a) ein erstes Versorgungsmittel (19) aktiviert wird, so dass den Toolingrohren (6a; 7a) von dem ersten Versorgungsmittel (19) über jeweils eine Versorgungsleitung (23a; 24a) an jeweils einer Energiekupplung (9; 10) pro Toolingrohr (6a; 7a) wahlweise Druckluft oder Vakuum zur Verfügung gestellt wird,
- wobei in der zweiten Betriebsart das Steuermittel (21) in eine zweite Schaltstellung (S2) geschaltet wird, so dass zur Versorgung der Zahl von Toolingrohren (6a, 7a) ein zweites Versorgungsmittel (20) aktiviert wird, so dass den Toolingrohren (6a; 7a) von dem zweiten Versorgungsmittel (20) über die jeweilige Energiekupplung (9; 10) jeweils über eine erste Versorgungsleitung (25b) Druckluft zum Abblasen und jeweils über eine zweite Versorgungsleitung (25a) Druckluft zur Vakuumerzeugung zur Verfügung gestellt wird.

2. Verfahren zum Betrieb eines Transfersystems nach Anspruch 1, **dadurch gekennzeichnet, dass** für einen Betrieb des Transfersystems (1) entsprechend der ersten Betriebsart eine Versorgung der Toolingrohre (6a; 7a) durch das zweite Versorgungsmittel (20) und dass für einen Betrieb des Transfersystems (1) entsprechend der zweiten Betriebsart eine Versorgung der Toolingrohre (6a; 7a) durch das erste Versorgungsmittel (19) durch Sperrventile (26-30; 31, 32), welche zwischen dem ersten, zentralen Versorgungsmittel (19) und dem zweiten, dezentralen Versorgungsmittel (20) angeordnet sind, abgesperrt wird.

3. Verfahren zum Betrieb eines Transfersystems nach Anspruch 1 oder 2, **dadurch gekennzeichnet, dass** für einen Betrieb des Transfersystems (1) nach der ersten Betriebsart je Toolingrohr (6a; 7a) nur ein Ausgang (13; 18) der jeweiligen Energiekupplung (9; 10) für eine wechselweise Zuleitung von Druckluft oder von Vakuum genutzt wird und der weitere Ausgang (14; 17) durch einen Verschluss (V14, V17), insbesondere ein Ventil oder einen Stopfen, verschlossen wird und dass für einen Betrieb des Transfersystems (1) nach der zweiten Betriebsart je Toolingrohr (6a; 7a) der erste Ausgang (13; 17) der jeweiligen Energiekupplung (9; 10) für eine Zuleitung von Druckluft zum Abblasen genutzt wird und der zweite Ausgang (14; 18) der jeweiligen Energiekupplung (9; 10) für eine Zuleitung von Druckluft zur Vakuumerzeugung genutzt wird.

4. Transfersystem (1) zur Durchführung eines Verfahrens nach einem der Ansprüche 1 bis 3 umfassend
- einen Manipulator (2) mit einer Quertraverse (3),
- wenigstens einen an der Quertraverse (3) montierten Adapter (4),
- mindestens eine Druckluftversorgung(8),
- wobei jeder Adapter (4) ein Grundgestell (5) und wenigstens ein Tooling (6; 7) mit einem Toolingrohr (6a; 7a) umfasst,
- wobei jedes Grundgestell (5) mindestens eine Energiekupplung (9; 10) für das mindestens eine Toolingrohr (6a; 7a) umfasst,
- wobei jede Energiekupplung (9; 10) zum Anschluss des wenigstens einen Toolings (6; 7) mindestens zwei Ausgänge (13, 14; 17, 18) für Druckluft und/oder Vakuum umfasst,
- wobei das Transfersystem (1) ein erstes an die Druckluftversorgung (8) angeschlossenes Versorgungsmittel (19) zur Bereitstellung von Druckluft und Vakuum umfasst
- und wobei das Transfersystem (1) ein zweites an die Druckluftversorgung (8) angeschlossenes Versorgungsmittel (20) zur Bereitstellung von Druckluft umfasst,
- wobei das Transfersystem (1) ein Steuermittel (21) umfasst,
- wobei in einer ersten Schaltstellung (S1) des Steuermittels (21) das wenigstens eine Toolingrohr (6a; 7a) über das erste Versorgungsmittel (19) mit Druckluft und Vakuum versorgt ist und
- wobei in einer zweiten Schaltstellung (S2) des Steuermittels (21) das wenigstens eine Toolingrohr (6a; 7a) über das zweite Versorgungsmittel (20) mit Druckluft versorgt ist,
**dadurch gekennzeichnet,**
- **dass** das erste, zentrale Versorgungsmittel (19) wenigstens eine mit Druckluft betriebene Vakuumerzeugungseinrichtung (23, 24) umfasst und
- **dass** das zweite, dezentrale Versorgungsmittel (20) wenigstens ein erstes Ventil (25-1) und ein zweites Ventil (25-2) umfasst,
- wobei das erste Versorgungsmittel (19) an einen ersten Eingang (11; 16) der Energiekupplung (9; 10) des Grundgestells (5) angeschlossen ist und diesen wahlweise mit Druckluft oder Vakuum speist und
- wobei das zweite Versorgungsmittel (20) an den ersten Eingang (11; 15) und einen zweiten (12; 16) Eingang der Energiekupplung (9; 10) des Grundgestells (5) angeschlossen ist und einen der Eingänge (11; 15) mit Druckluft speist und den anderen der Eingänge (12; 16) ebenfalls mit Druckluft speist.

5. Transfersystem nach Anspruch 4, **dadurch gekennzeichnet, dass** das Steuermittel (21) und das zweite, dezentrale Versorgungsmittel (20) an dem Manipulator (2) oder an der Quertraverse (3) oder an dem Grundgestell (5) angeordnet sind und dass das erste, zentrale Versorgungsmittel (19) an dem Grundgestell (5) oder der Quertraverse (3) angeordnet ist.

6. Transfersystem nach Anspruch 4 oder 5, **dadurch gekennzeichnet,**
- **dass** das Steuermittel (21) ein Umschaltventil (22) und mehrere Sperrventile (26-30; 31, 32) umfasst,
- wobei die Sperrventile (26-30; 31, 32) zwischen dem ersten Versorgungsmittel (19) und zwischen dem zweiten Versorgungsmittel (20) und der wenigstens einen Energiekupplung (9; 10) derart angeordnet sind,
- **dass** in der ersten Schaltstellung (S1) des Steuermittels (21) Versorgungsleitungen (25a; 25b) zwischen dem zweiten Versorgungsmittel (20) und den Eingängen (11, 12; 15, 16) der Energiekupplung (9; 10) gesperrt sind und die Versorgungsleitung bzw. die Versorgungsleitungen (23a; 24a) zwischen dem ersten Versorgungsmittel (19) und dem Eingang bzw. den Eingängen (11; 16) der Energiekupplung (9; 10) geöffnet ist bzw. sind und
- **dass** in der zweiten Schaltstellung (S2) des Steuermittels (21) die Versorgungsleitung bzw. die Versorgungsleitungen (23a; 24a) zwischen dem ersten Versorgungsmittel (19) und dem Eingang bzw. den Eingängen (11; 16) der Energiekupplung (9; 10) gesperrt ist bzw. sind und die Versorgungsleitungen (25a; 25b) zwischen dem zweiten Versorgungsmittel (20) und den Eingängen (11, 12; 15, 16) der Energiekupplung (9; 10) geöffnet sind.

7. Transfersystem nach einem der Ansprüche 4 bis 6, **dadurch gekennzeichnet,**
- **dass** eines der Toolingrohre (6a; 7a) derart an eine der Energiekupplungen (9; 10) angeschlossen ist, dass das Toolingrohr (6a; 7a) und die an diesem angeordneten Sauggreifer (6b-6f; 7b-7f) in der ersten Schaltstellung (S1) des Steuermittels (21) mit einem der Ausgänge (13; 18) der Energiekupplung (9; 10) verbunden sind, welcher mit dem Eingang (11; 16) der Energiekupplung (9; 10) in Verbindung steht, welcher an das erste Versorgungsmittel (19) angeschlossen ist, wobei der jeweils andere zweite Ausgang (14; 17) der Energiekupplung (9; 10) insbesondere durch das Toolingrohr (6a; 7a) verschlossen ist oder
- **dass** eines der Toolingrohre (6a; 7a) derart an eine der Energiekupplungen (9; 10) angeschlossen ist, dass das Toolingrohr (6a; 7a) und die an diesem angeordneten Sauggreifer (6b-6f; 7b-7f) in der zweiten Schaltstellung (S2) des Steuermittels (21) mit den Ausgängen (13, 14; 17, 18) der Energiekupplung (9; 10) verbunden sind, welche mit den Eingängen (11, 12; 15, 16) der Energiekupplung (9; 10) in Verbindung stehen, welche an das zweite Versorgungsmittel (20) angeschlossen sind.

8. Transfersystem nach einem der Ansprüche 4 bis 7, **dadurch gekennzeichnet, dass** das Transfersystem (1) zwei mit der Quertraverse (3) verbundene Grundgestelle (5; 105) mit je zwei Energiekupplungen (9, 10) umfasst, und wobei das Transfersystem (1) vier Toolingrohre (6a; 7a) umfasst, wobei diese an die vier Energiekupplungen (9; 10) angeschlossen sind.

9. Transfersystem nach Anspruch 4, **dadurch gekennzeichnet,**
- **dass** die wenigstens eine Vakuumerzeugungseinrichtung (23; 24) des ersten Versorgungsmittels (19) als pneumatisch gesteuerte Vakuumerzeugungseinrichtung mit einem Kompaktejektor ausgebildet ist oder
- **dass** die wenigstens eine Vakuumerzeugungseinrichtung (23; 24) des ersten Versorgungsmittels (19) als elektrisch gesteuerte Vakuumerzeugungseinrichtung mit einem Kompaktejektor ausgebildet ist.

10. Transfersystem nach wenigstens einem der Ansprüche 4 bis 9, **dadurch gekennzeichnet, dass** jedes Tooling (6; 7), das in der zweiten Schaltstellung (S2) des Steuermittels (21) betrieben wird, an jedem seiner Sauggreifer (6b-6f; 7b-7f) einen Einzelejektor zur Vakuumerzeugung umfasst.

## Claims

1. Method for operating a transfer system (1), **characterized in that** the transfer system (1) is operated either according to first operating mode or according to a second operating mode,
- wherein, in the first operating mode, a controlling means (21) is switched to a first switching position (S1), so that a first supplying means (19) is activated for supplying a number of tooling tubes (6a; 7a), so that, optionally, compressed air or a vacuum is made available to the tooling tubes (6a; 7a) by the first supplying means (19) by way in each case of a supplying line (23a; 24a) at in each case an energy coupling (9; 10) for each tooling tube (6a; 7a),
- wherein, in the second operating mode, the controlling means (21) is switched to a second switching position (S2), so that a second supplying means (20) is activated for supplying the number of tooling tubes (6a, 7a), so that compressed air for blowing out is made available in each case by way of a first supplying line (25b) and compressed air for generating a vacuum is made available in each case by way of a second supplying line (25a) to the tooling tubes (6a; 7a) by the second supplying means (20) by way of the respective energy coupling (9; 10).

2. Method for operating a transfer system according to Claim 1, **characterized in that**, for operating the transfer system (1) in accordance with the first operating mode, supplying the tooling tubes (6a; 7a) by the second supplying means (20) and, for operating the transfer system (1) in accordance with the second operating mode, supplying the tooling tubes (6a; 7a) by the first supplying means (19) is shut off by shut-off valves (26-30; 31, 32), which are arranged between the first, centralized supplying means (19) and the second, decentralized supplying means (20).

3. Method for operating a transfer system according to Claim 1 or 2, **characterized in that**, for operating the transfer system (1) according to the first operating mode, for each tooling tube (6a; 7a), only one output (13; 18) of the respective energy coupling (9; 10) is used for optionally providing compressed air or a vacuum and the further output (14; 17) is closed by a closure (V14, V17), in particular a valve or a plug, and **in that**, for operating the transfer system (1) according to the second operating mode, for each tooling tube (6a; 7a), the first output (13; 17) of the respective energy coupling (9; 10) is used for providing compressed air for blowing out and the second output (14; 18) of the respective energy coupling (9; 10) is used for providing compressed air for generating a vacuum.

4. Transfer system (1) for carrying out a method according to one of Claims 1 to 3 comprising
- a manipulator (2) with a cross member (3),
- at least one adapter (4) mounted on the cross member (3),
- at least one compressed air supply (8),
- wherein each adapter (4) comprises a base frame (5) and at least one tooling (6; 7) with a tooling tube (6a; 7a),
- wherein each base frame (5) comprises at least one energy coupling (9; 10) for the at least one tooling tube (6a; 7a),
- wherein each energy coupling (9; 10) comprises at least two outputs (13, 14; 17, 18) for compressed air and/or a vacuum for the connection of the at least one tooling (6; 7),
- wherein the transfer system (1) comprises a first supplying means (19), connected to the compressed-air supply (8), for providing compressed air and a vacuum
- and wherein the transfer system (1) comprises a second supplying means (20), connected to the compressed-air supply (8), for providing compressed air,
- wherein the transfer system (1) comprises a controlling means (21),
- wherein, in a first switching position (S1) of the controlling means (21), the at least one tooling tube (6a; 7a) is supplied with compressed air and a vacuum by way of the first supplying means (19) and
- wherein, in a second switching position (S2) of the controlling means (21), the at least one tooling tube (6a; 7a) is supplied with compressed air by way of the second supplying means (20),
**characterized**
- **in that** the first, centralized supplying means (19) comprises at least one vacuum-generating device (23, 24) and
- **in that** the second, decentralized supplying means (20) comprises at least a first valve (25-1) and a second valve (25-2),
- wherein the first supplying means (19) is connected to a first input (11; 16) of the energy coupling (9; 10) of the base frame (5) and optionally feeds it with compressed air or a vacuum and
- wherein the second supplying means (20) is connected to the first input (11; 15) and a second input (12; 16) of the energy coupling (9; 10) of the base frame (5) and feeds one of the inputs (11; 15) with compressed air and the other of the inputs (12; 16) likewise with compressed air.

5. Transfer system according to Claim 4, **characterized in that** the controlling means (21) and the second, decentralized supplying means (20) are arranged on the manipulator (2) or on the cross member (3) or on the base frame (5) and **in that** the first, centralized supplying means (19) is arranged on the base frame (5) or the cross member (3).

6. Transfer system according to Claim 4 or 5, **characterized**
- **in that** the controlling means (21) comprises a switch-over valve (22) and a number of shut-off valves (26-30; 31, 32),
- wherein the shut-off valves (26-30; 31, 32) between the first supplying means (19) and between the second supplying means (20) and the at least one energy coupling (9; 10) are arranged in such a way
- that, in the first switching position (S1) of the controlling means (21), supplying lines (25a; 25b) between the second supplying means (20) and the inputs (11, 12; 15, 16) of the energy coupling (9; 10) are shut off and the supplying line or the supplying lines (23a; 24a) between the first supplying means (19) and the input or the inputs (11; 16) of the energy coupling (9; 10) is or are open and
- that, in the second switching position (S2) of the controlling means (21), the supplying line or the supplying lines (23a; 24a) between the first supplying means (19) and the input or the inputs (11; 16) of the energy coupling (9; 10) is or are shut off and the supplying lines (25a; 25b) between the second supplying means (20) and the inputs (11, 12; 15, 16) of the energy coupling (9; 10) are open.

7. Transfer system according to one of Claims 4 to 6, **characterized**
- **in that** one of the tooling tubes (6a; 7a) is connected to one of the energy couplings (9; 10) in such a way that the tooling tube (6a; 7a) and the suction gripper (6b-6f; 7b-7f) arranged on it are connected in the first switching position (S1) of the controlling means (21) to one of the outputs (13; 18) of the energy coupling (9; 10) which is in connection with the input (11; 16) of the energy coupling (9; 10) which is connected to the first supplying means (19), wherein the other, second output (14; 17) respectively of the energy coupling (9; 10) is closed, in particular by the tooling tube (6a; 7a), or
- **in that** one of the tooling tubes (6a; 7a) is connected to one of the energy couplings (9; 10) in such a way that the tooling tube (6a; 7a) and the suction grippers (6b-6f; 7b-7f) arranged on it are connected in the second switching position (S2) of the controlling means (21) to the outputs (13, 14; 17, 18) of the energy coupling (9; 10) which are in connection with the inputs (11, 12; 15, 16) of the energy coupling (9; 10) which are connected to the second supplying means (20).

8. Transfer system according to one of Claims 4 to 7, **characterized in that** the transfer system (1) comprises two base frames (5; 105), which are connected to the cross member (3) and each have two energy couplings (9, 10), and wherein the transfer system (1) comprises four tooling tubes (6a; 7a), wherein these are connected to the four energy couplings (9; 10).

9. Transfer system according to Claim 4, **characterized**
- **in that** the at least one vacuum-generating device (23; 24) of the first supplying means (19) is designed as a pneumatically controlled vacuum-generating device with a compact ejector or
- **in that** the at least one vacuum-generating device (23; 24) of the first supplying means (19) is designed as an electrically controlled vacuum-generating device with a compact ejector.

10. Transfer system according to at least one of Claims 4 to 9, **characterized in that** each tooling (6; 7) which is operated in the second switching position (S2) of the controlling means (21) comprises on each of its suction grippers (6b-6f; 7b-7f) a single ejector for generating a vacuum.

## Revendications

1. Procédé de fonctionnement d'un système de transfert (1), **caractérisé en ce que** le système de transfert (1) fonctionne soit dans un premier mode de fonctionnement soit dans un deuxième mode de fonctionnement,
- dans le premier mode de fonctionnement, un moyen de commande (21) étant commuté dans une première position de commutation (S1) de sorte qu'un premier moyen d'alimentation (19) soit activé pour alimenter un certain nombre de tubes d'outillage (6a ; 7a) de sorte que de l'air comprimé ou du vide soit fourni par le premier moyen d'alimentation (19) aux tubes d'outillage (6a ; 7a) par le biais d'une conduite d'alimentation (23a ; 24a) au niveau d'un raccord d'énergie respectif (9 ; 10) par tube d'outillage (6a ; 7a),
- dans le deuxième mode de fonctionnement, le moyen de commande (21) étant commuté dans une deuxième position de commutation (S2) de sorte qu'un deuxième moyen d'alimentation (20) soit activé pour alimenter ledit nombre de tubes d'outillage (6a, 7a) de sorte que de l'air comprimé destiné au soufflage soit fourni par le deuxième moyen d'alimentation (20) aux tubes d'outillage (6a ; 7a) par le biais d'une première conduite d'alimentation (25b) au niveau du raccord d'énergie respectif (9 ; 10) et que l'air comprimé destiné à la génération de vide soit fourni par le biais d'une deuxième conduite d'alimentation (25a).

2. Procédé de fonctionnement d'un système de transfert selon la revendication 1, **caractérisé en ce que** des vannes d'arrêt (26-30 ; 31, 32), qui sont disposées entre le premier moyen d'alimentation central (19) et le deuxième moyen d'alimentation non-central (20), ferment une alimentation des tubes d'outillage (6a ; 7a) par le deuxième moyen d'alimentation (20) afin que le système de transfert (1) fonctionne dans le premier mode de fonctionnement et une alimentation des tubes d'outillage (6a ; 7a) par le premier moyen d'alimentation (19) afin que le système de transfert (1) fonctionne dans le deuxième mode de fonctionnement.

3. Procédé de fonctionnement d'un système de transfert selon la revendication 1 ou 2, **caractérisé en ce que**, pour que le système de transfert (1) fonctionne dans le premier mode de fonctionnement, pour chaque tube d'outillage (6a ; 7a), une seule sortie (13 ; 18) du raccord d'énergie respectif (9 ; 10) sert à l'alimentation alternative en air comprimé ou en vide et l'autre sortie (14 ; 17) est fermée par une fermeture (V14, V17), en particulier une vanne ou un bouchon, et **en ce que**, pour que le système de transfert (1) fonctionne dans le deuxième mode de fonctionnement, pour chaque tube d'outillage (6a ; 7a), la première sortie (13 ; 17) du raccord d'énergie respectif (9 ; 10) sert à l'alimentation en air comprimé destiné au soufflage et la deuxième sortie (14 ; 18) du raccord d'énergie respectif (9 ; 10) sert à l'alimentation en air comprimé destiné à la génération de vide.

4. Système de transfert (1) destiné à mettre en œuvre un procédé selon l'une des revendications 1 à 3, ledit système comprenant
- un manipulateur (2) muni d'une traverse (3),
- au moins un adaptateur (4) monté sur la traverse (3),
- au moins une alimentation en air comprimé (8),
- chaque adaptateur (4) comprenant un cadre de base (5) et au moins un outillage (6 ; 7) pourvu d'un tube d'outillage (6a ; 7a),
- chaque cadre de base (5) comprenant au moins un raccord d'énergie (9 ; 10) destiné à l'au moins un tube d'outillage (6a ; 7a),
- chaque raccord d'énergie (9 ; 10) destiné à raccorder l'au moins un outillage (6 ; 7) comportant au moins deux sorties (13, 14 ; 17, 18) destinées à l'air comprimé et/ou au vide,
- le système de transfert (1) comprenant un premier moyen d'alimentation (19) raccordé à l'alimentation en air comprimé (8) et destiné à fournir de l'air comprimé et du vide, et
- le système de transfert (1) comprenant un deuxième moyen d'alimentation (20) raccordé à l'alimentation en air comprimé (8) et destiné à fournir de l'air comprimé,
- le système de transfert (1) comprenant un moyen de commande (21),
- dans une première position de commutation (S1) du moyen de commande (21), l'au moins un tube d'outillage (6a ; 7a) étant alimenté en air comprimé et en vide par le biais du premier moyen d'alimentation (19) et
- dans une deuxième position de commutation (S2) du moyen de commande (21), l'au moins un tube d'outillage (6a ; 7a) étant alimenté en air comprimé par le biais du deuxième moyen d'alimentation (20),
**caractérisé en ce que**
- le premier moyen d'alimentation central (19) comprend au moins un dispositif de génération de vide (23, 24) fonctionnant avec de l'air comprimé, et
- le deuxième moyen d'alimentation non-central (20) comprend au moins une première vanne (25-1) et une deuxième vanne (25-2),
- le premier moyen d'alimentation (19) étant raccordé à une première entrée (11 ; 16) du raccord d'énergie (9 ; 10) du cadre de base (5) et l'alimentant au choix en air comprimé ou en vide et
- le deuxième moyen d'alimentation (20) étant raccordé à la première entrée (11 ; 15) et à une deuxième entrée (12 ; 16) du raccord d'énergie (9 ; 10) du cadre de base (5) et alimentant l'une des entrées (11 ; 15) en air comprimé et alimentant également l'autre des entrées (12 ; 16) en air comprimé.

5. Système de transfert selon la revendication 4, **caractérisé en ce que** le moyen de commande (21) et le deuxième moyen d'alimentation non-central (20) sont disposés au niveau du manipulateur (2) ou au niveau de la traverse (3) ou au niveau du cadre de base (5) et **en ce que** le premier moyen d'alimentation central (19) est disposé au niveau du cadre de base (5) ou de la traverse (3).

6. Système de transfert selon la revendication 4 ou 5, **caractérisé en ce que** le moyen de commande (21) comprend une vanne de commutation (22) et une pluralité de vannes d'arrêt (26-30 ; 31, 32),
- les vannes d'arrêt (26-30 ; 31, 32) sont disposés entre le premier moyen d'alimentation (19) et entre le deuxième moyen d'alimentation (20) et l'au moins un raccord d'énergie (9 ; 10) de telle sorte que
- dans la première position de commutation (S1) du moyen de commande (21), des lignes d'alimentation (25a ; 25b) entre le deuxième moyen d'alimentation (20) et les entrées (11, 12 ; 15, 16) du raccord d'énergie (9 ; 10) soient bloquées et la ligne d'alimentation ou les lignes d'alimentation (23a ; 24a) entre le premier moyen d'alimentation (19) et l'entrée ou les entrées (11 ; 16) du raccord d'énergie (9 ; 10) soient ouvertes et
- dans la deuxième position de commutation (S2) du moyen de commande (21), la ligne d'alimentation ou les lignes d'alimentation (23a ; 24a) entre le premier moyen d'alimentation (19) et l'entrée ou les entrées (11 ; 16) du raccord d'énergie (9 ; 10) soient bloquées et les lignes d'alimentation (25a ; 25b) entre le deuxième moyen d'alimentation (20) et les entrées (11, 12 ; 15, 16) du raccord d'énergie (9 ; 10) soient ouvertes.

7. Système de transfert selon l'une des revendications 4 à 6, **caractérisé en ce que**
- l'un des tubes d'outillage (6a ; 7a) est relié à l'un des raccords d'énergie (9 ; 10) de telle sorte que le tube d'outillage (6a ; 7a) et les éléments de préhension par aspiration (6b-6f ; 7b-7f), disposés au niveau de celui-ci, soient reliés dans la première position de commutation (S1) du moyen de commande (21) à l'une des sorties (13 ; 18) du raccord d'énergie (9 ; 10) qui est reliée à l'entrée (11 ; 16) du raccord d'énergie (9 ; 10) qui est raccordée au premier moyen d'alimentation (19), l'autre deuxième sortie respective (14 ; 17) du raccord d'énergie (9 ; 10) étant fermée en particulier par le tube d'outillage (6a ; 7a) ou
- l'un des tubes d'outillage (6a ; 7a) est relié à l'un des raccords d'énergie (9 ; 10) de telle sorte que le tube d'outillage (6a ; 7a) et les éléments de préhension par aspiration (6b-6f ; 7b-7f), disposés au niveau de celui-ci, soient reliés dans la deuxième position de commutation (S2) du moyen de commande (21) aux sorties (13, 14 ; 17, 18) du raccord d'énergie (9 ; 10) qui sont reliées aux entrées (11, 12 ; 15, 16) du raccord d'énergie (9 ; 10) qui sont raccordées au deuxième moyen d'alimentation (20).

8. Système de transfert selon l'une des revendications 4 à 7, **caractérisé en ce que** le système de transfert (1) comprend deux cadres de base (5 ; 105) reliés à la traverse (3), chacun avec deux couplages énergétiques (9, 10), et dans lequel le système de transfert (1) comprend quatre tubes d'outillage (6a ; 7a), ceux-ci étant reliés aux quatre couplages énergétiques (9 ; 10) .

9. Système de transfert selon la revendication 4, **caractérisé en ce que**
- l'au moins un dispositif de génération de vide (23 ; 24) du premier moyen d'alimentation (19) est conçu comme un dispositif de génération de vide à commande pneumatique pourvu d'un éjecteur compact, ou
- l'au moins un dispositif de génération de vide (23 ; 24) du premier moyen d'alimentation (19) est conçu comme un dispositif de génération de vide à commande électrique pourvu d'un éjecteur compact.

10. Système de transfert selon l'une au moins des revendications 4 à 9, **caractérisé en ce que** chaque outillage (6 ; 7), qui fonctionne dans la deuxième position de commutation (S2) du moyen de commande (21), comprend au niveau de chacun de ses éléments de préhension par aspiration (6b-6f ; 7b-7f) un seul éjecteur destiné à la génération de vide.
